# EUROPEAN PATENT SPECIFICATION

(11) **EP 1 617 917 B1**
(45) Date of publication and mention of the grant of the patent: **30.09.2009**
(21) Application number: 04704116.5
(22) Date of filing: 21.01.2004
(51) Int. Cl.: A63B 37/00

(54) **GOLF BALL OF UNITARY MOLDED CONSTRUCTION**
EINHEITLICH GEFORMTER GOLFBALL
BALLE DE GOLF DE CONSTRUCTION UNITAIRE MOULEE

(30) Priority: 21.01.2003 US 347720; 21.01.2004 US 762845
(43) Date of publication of application: 25.01.2006
(73) Proprietor: Almost Golf, Inc., Santa Monica, CA 90404 (US)
(72) Inventor: PETERSON, Robert, Santa Monica, CA 90404 (US)
(74) Representative: Modiano, Micaela Nadia
(86) International application number: PCT/US2004/001635
(87) International publication number: WO 2004/064935

(56) References cited:
- EP-A2- 0 154 735
- EP-A2- 0 281 336
- GB-A- 1 508 829
- US-A- 4 350 795
- US-A- 5 883 145
- US-B1- 6 303 666

## Description

### TECHNICAL FIELD

The present invention relates generally to golf balls, and more specifically, to one piece golf balls of unitary molded construction that are suitable for shorter and "off-course" playing, as well as to methods of manufacturing relating thereto.

### BACKGROUND OF THE INVENTION

Golf balls have traditionally been categorized into three different groups; namely, (1) one piece golf balls of unitary molded construction, (2) multi-piece golf balls (*i*.*e*., two or more concentric pieces) of layered construction, and (3) wound golf balls (*i.e.*, core consists of a wound elastic thread) of layered construction. The physical and structural differences among these three distinct groups of golf ball construction are very significant; as are the differences in their play characteristics.

The wound golf ball (frequently referred to as a three piece golf ball), for example, is generally made from a vulcanized rubber thread wound under tension around a solid or semi-solid center to form a wound core. The wound core is then encased in a single or multi-layer covering of one or more tough protective materials. Similarly, the multi-piece golf ball is generally made from a solid resilient core having single or multiple cover layers thereon. In both types of layered golf ball, the materials of the inner layers tend to vary significantly, while the material of the outermost cover layer is most commonly either balata or SURLYN (E.I. duPont de Nemours and Company, United States). In this regard, it is generally believed that SURLYN provides a stronger, more durable cover, whereas balata provides a softer cover that offers a bit more spin control. Regardless of the cover layer material, golf balls of layered construction have evolved significantly over the years to achieve, among other things, better flight and distance characteristics (innovations made possible, in part, by the development of new synthetic polymers and other specialty chemicals). Indeed, searchable databases maintained by the U.S. Patent and Trademark Office reveal that several thousand U.S. patents have thus far been issued on inventions relating to golf balls of layered construction.

In contradistinction, one piece golf balls of unitary molded construction are typically formed from a homogeneous mass of a moldable synthetic material. As such, golf balls of this type of construction generally possess a homogeneous composition (*i*.*e*., the composition is substantially uniform between the interior and exterior of each ball); and there is generally no separate outer protective covering. One piece golf balls of unitary molded construction are known in the art and have been described over the years in the patent literature. Exemplary in this regard are U.S. Pat. No. 3,238,156, U.S. Pat. No. 3,239,228, U.S. Pat. No. 3,241,834, U.S. Pat. No. 3,313,545; U.S. Pat. No. 3,373,123, U.S. Pat. No. 3,384,612, U.S. Pat. No. 3,421,766, U.S. Pat. No. 3,438,933, U.S. Pat. No. 3,452, 986, U.S. Pat. No. 3992,014, U.S. Pat. No. 4,165,877, U.S. Pat. No. 4,266,772, U.S. Pat. No. 4,836,552, U.S. Pat. No. 4,839,116, U.S. Pat. No. U.S. 5,082,285, U.S. Pat. No. 5,330,837, and U.S. Pat. No. 6,277,924. In general, the unitary golf balls described in these patents are suitable only for practice, and not competitive play. More importantly, however, is that these patents reveal that relatively few technological innovations have been made over the years with respect to one piece golf balls, especially with respect to the use of newly developed synthetic polymers and other specialty chemicals, like described in the documents: US-A-5 883 145, EP-A-0 281 336.

Specifically, and although numerous attempts have been made to manufacture one piece golf balls of unitary molded construction, a one piece golf ball has not yet been developed that is both relatively lightweight and able to "pop" off a club face like that of a layered construction golf ball. In addition, there has not yet been developed a one piece golf ball that has great elasticity and bouncing characteristics and that is suitable for shorter or off-course playing. Accordingly, there is still a need in the art for novel golf balls of unitary molded construction, as well as to methods of manufacturing relating thereto. The present invention fulfills these needs and provides for further related advantages.

### SUMMARY OF THE INVENTION

In brief, the present invention relates generally to golf balls, and more specifically, to one piece golf balls of unitary molded construction suitable for shorter (*e.g.*, par 3 courses) and "off-course" playing, as well as to methods of manufacturing relating thereto. In one embodiment, the present invention is directed to a golf ball of unitary molded construction, wherein the entire golf ball is foamed from a composition that comprises an ethylene-vinyl acetate copolymer, a thermoplastic elastomer, and a blowing agent. The golf ball in this embodiment may have (i) a diameter that ranges from 4,1 to 6,1 cm (about 1.6 to about 2.4 inches), (ii) a weight that ranges from about 10 to about 28 grams, and/or (iii) a coefficient of restitution value that ranges from about 0.30 to about 0.45, and more preferably ranges from about 0.33 to about 0.42. The ethylene-vinyl acetate copolymer component generally ranges from about 0 to about 99 weight percent of the total composition, and preferably ranges from about 40 to about 90 percent of the total composition, and more preferably ranges from about 60 to about 70 percent of the total composition. Similarly, the thermoplastic elastomer component also generally ranges from about 0 to about 99 weight percent of the total composition, and preferably ranges from about 5 to about 60 percent of the total composition, and more preferably ranges from about 10 to about 25 percent of the total composition. In addition, the blowing agent component generally ranges from about 1 to about 13 weight percent of the total composition, and preferably ranges from about 5 to about 9 percent of the total composition. The composition used to make to golf balls of the present invention may further comprise one or more processing additives and/or colorants as is appreciated by those skilled in the art. For example, a small amount of polypropylene may be added to the composition as it tends to reduce certain surface imperfections such as undesirable branched or swirled "brain-like" surface indicia. The amount of polypropylene that may be added ranges from about 0 to about 10 weight percent of the total composition, and preferably ranges from about 1.5 to about 6.5 weight percent of the total composition, and more preferably from about 5 to about 6 weight percent of the total composition.

In another embodiment, the present invention is directed to a golf ball of unitary molded construction, wherein the golf ball is foamed from a composition comprising: (i) a major amount by weight of an ethylene-vinyl acetate copolymer; (ii) a minor amount by weight of a thermoplastic elastomer material; and (iii) a blowing agent. The thermoplastic elastomer material associated with several embodiments disclosed herein may be one or more of (i) a thermoplastic elastomer based on a dynamically vulcanized elastomer-thermoplastic blend, (ii) a styrene tri-block copolymer thermoplastic elastomer, and (iii) an ethylene-α-olefin copolymer thermoplastic elastomer.

In yet another embodiment, the present invention is directed to a method of making a golf ball of unitary molded construction. In this embodiment, the method comprises at least the following steps: compounding a polymeric composition from the ingredients comprising an ethylene-vinyl acetate copolymer and a thermoplastic elastomer; combining the polymeric composition with a blowing agent to yield a feedstock; injecting the feedstock into a mold having a substantially spherical shape; and cooling the mold to form the golf ball. The method may further comprise the step of quenching the golf ball in an agitated water bath. The present invention is also directed to a golf ball made in accordance with these methods.

These and other aspects of the present invention disclosed herein will become more evident upon reference to following detailed description.

### DETAILED DESCRIPTION OF THE INVENTION

As noted above, the present invention relates generally to golf balls, and more specifically, to one piece golf balls of unitary molded construction suitable for shorter and "off-course" playing, as well as to methods of manufacturing relating thereto. In some embodiments, the golf balls of the present invention comprise a thermoplastic elastomer material admixed together with an ethylene-vinyl acetate copolymer. More specifically, it has been discovered that unitary golf balls made from a composition comprising (i) one or more thermoplastic elastomer materials, (ii) an ethylene-vinyl acetate copolymer, and (iii) other optional fillers and/or processing additives, have highly desirable properties and characteristics which make them highly desirable for shorter and "off-course" playing. For example, it has been surprisingly discovered that, among other things, golf balls made from such novel compositions are highly suitable for "off-course" playing because they are highly elastic (and thus have a good "spring" feel when hit off a club face), durable, and travel only about one-third to about one-half as far as a conventional golf ball of layered construction. In addition, the unitary golf balls of the present invention are, in general, relatively less expensive to produce than many other types of practice or off-course golf balls.

In some exemplary embodiments, the unitary golf balls of the present invention are made of a foamed thermoplastic elastomer / ethylene-vinyl acetate copolymer admixture that has been molded into the shape of a standard sized golf ball (*i*.*e*., golf ball having a diameter of about 4,3 cm (1.68 inches)). However, it is to be understood that unitary golf ball of nonstandard sizes (*e*.*g*., golf ball with diameters ranging from 4,1 to 6,1 cm (about 1.6 inches or less to about 2.4 inches) or more) may likewise be made. The thermoplastic elastomer component of such an admixture is preferably a styrene tri-block copolymer thermoplastic elastomer, and the ethylene-vinyl acetate copolymer preferably has a vinyl acetate content ranging from about 15% to about 18%. The weight of each such exemplary golf ball generally ranges from about 10 to about 28 grams (and preferably from about 12 to about 16 grams); whereas the "coefficient of restitution" (COR) generally ranges from about 0.33 to about 0.42 (and preferably from about 0.36 to about 0.39). As is appreciated by those skilled in the art, the "coefficient of restitution" is simply a measure of the ratio of the relative velocity of an elastic sphere immediately before and after a direct impact. The "coefficient of restitution" can vary from zero to one, with one being equivalent to a completely elastic collision and zero being equivalent to a completely inelastic collision.

Because many embodiments of the present invention encompass a wide range of possible polymer compositions - particularly with respect to ingredients such as, for example, thermoplastic elastomer materials and ethylene-vinyl acetate copolymers - relevant disclosure has been included pertaining to the following: (1) overview of.polymer nomenclature and theory (2) suitable thermoplastic elastomer materials; (3) suitable ethylene-vinyl acetate copolymers; (4) suitable additives; (5) exemplary compounding techniques; and (6) exemplary unitary golf ball manufacturing processes. In addition, several illustrative Examples have also been included that help demonstrate some of the novel features and characteristics associated with the unitary golf balls of the present invention. Finally, and although many specific details of certain embodiments of the present invention are set forth below, it is to be understood that the present invention may have additional embodiments, and that the invention may be practiced without several of the details described herein.

For purposes of clarity, a brief review of polymer nomenclature is provided to aid in the understanding of the present invention. In general, a polymer is a macromolecule (*i*.*e*., a long chain molecular chain) synthetically derived from the polymerization of monomer units or which exists naturally as a macromolecule (but which is still derived from the polymerization of monomer units). The links of the molecular chain are the monomer units. For example, polypropylene is a polymer derived from the monomer propylene (CH₂CHCH₃). More specifically, polypropylene is a "homopolymer," that is, a polymer consisting of a single repeating unit, namely, the monomer propylene (CH₂CHCH₃).

In contrast, a "copolymer" is a polymer containing two (or more) different monomer units. A copolymer may generally be synthesized in several ways. For example, a copolymer may be prepared by the copolymerization of two (or more) different monomers. Such a process yields a copolymer where the two (or more) different monomers are randomly distributed throughout the polymer chain. These copolymers are known as "random copolymers." Alternatively, copolymers may be prepared by the covalent coupling or joining of two homopolymers. For example, the covalent coupling of one homopolymer to the terminus of a second, different homopolymer provides a "block copolymer." A block copolymer containing homopolymer A and homopolymer B may be schematically represented by the following formula: (A)ₓ(B)_{y} where (A)ₓ is a homopolymer consisting of x monomers of A, (B)_{y} is homopolymer consisting of y monomers of B, and wherein the two homopolymers are joined by a suitable covalent bond or linking spacer group. While the above formula illustrates a block copolymer having two block components (*i*.*e*., a "di-block copolymer"), block copolymers may also have three or more block components (*e.g.*, a "tri-block copolymer" schematically represented by the formula (A)ₓ(B)_{y}(A)ₓ or simply A-B-A, as well as a "multiblock copolymer" schematically represented by the formula (-A-B)ₙ).

As noted above, exemplary thermoplastic elastomer materials (*i*.*e*., TPEs) of the present invention include, but are not limited to, any one or combination of the following: thermoplastic polyurethane elastomers (*i*.*e*., TPUs), polyolefin-based thermoplastic elastomers (*i.e.*, TPOs), thermoplastic elastomers based on dynamically vulcanized elastomer-thermoplastic blends (*i.e*. TPVs), thermoplastic polyether ester elastomers, thermoplastic elastomers based on halogen-containing polyolefins, thermoplastic elastomers based on polyamides, styrene based thermoplastic elastomers, and ethylene-α-olefin copolymer thermoplastic elastomers. As is appreciated by those skilled in the art, many of these materials may be characterized (unlike conventional single-phase thermoplastic materials) as having one or more copolymers that comprise a major proportion of a soft segment and a minor proportion of a hard segment so as to result in a composition having a two-phase morphology.

Without necessarily prescribing to any specific scientific theory, it is believed that many of the thermoplastic elastomers utilized in the present invention possess unique thermal and mechanical properties because they consist of hard segments that have a high glass transition temperature (T_{g}) or melting temperature (Tₘ) alternating with soft segments that have a low T_{g} (<<room temperature). In addition to these constraints, the hard and soft segments are generally chosen such that the free energy of mixing is positive. As such, the mutual incompatibility of the segments induces microphase separation in the solid state: the hard segments tend to aggregate to form glassy or semicrystalline hard domains interspersed in a continuous soft segment matrix (hence, a two-phase morphology). The boundaries between these two phases are not well defined because there exists some degree of forced compatibility due to the relatively short average chain lengths and molecular weight distributions (*i*.*e*., generally below 4,000 atomic mass units) associated with each of the two types of segments.

In addition to the foregoing and as further appreciated by those skilled in the art, the soft segments contribute to the flexibility and extensibility of the thermoplastic elastomer, whereas the glassy or semicrystalline domains of the hard segments serve as physical crosslinks that impedes chain slippage and viscous flow. Because the crosslinks associated with the hard segments are physical in nature (in contradistinction to the chemical bonds found in vulcanized rubber), they are thermally reversible. As such, heating above the softening or melting point of the hard segment generally causes the hard domains to disassociate and become fluid. Without the hard segment tie points, the thermoplastic elastomer is able to flow, and therefore can be melt processed in conventional thermoplastic processing equipment, such as, for example, conventional injection molding equipment.

Moreover, it is to be understood that the polymer chains associated with the soft and hard segments may be synthesized with any number of monomer units - so as to range from short to long - wherein the soft and hard segment chain lengths define, in large part, the physical properties of the thermoplastic elastomer. The lengths of the soft and hard segments notwithstanding, any of the thermoplastic elastomer materials (as well as various combinations thereof) disclosed herein may be used to produce the golf balls of the present invention. For purposes of added clarification, the several different classifications of the above-identified thermoplastic elastomer materials are more fully identified and described below.

The thermoplastic polyurethane elastomers (*i*.*e*. TPUs) of the present invention are generally made from long-chain polyols with an average molecular weight of 60 to 4,000, chain extenders with a molecular weight of 61 to 400, and polyisocynanates. Within the genus of TPUs, the soft flexible segments generally comprise either hydroxyl terminated polyesters or hydroxyl terminated polyethers, whereas the hard segments generally comprise 4,1'-diphenylmethane diisocyanate. The hard segments may, however, comprise hexamethylene diisocyanate, 4,4"-dicyclohexylmethane diisocyanate, 3,3'-diniethyl-4,4"-biphenyl diisocyanate, 1,4-benzene diisocyanate, *trans*-cyclohexane-1,4-diisocyanate, and 1,5-naphthalene diisocyanate. As is appreciated by those skilled in the art, the characteristics of the hard segment and to a large extent the physical properties of the TPU are generally determined by the choice of the polyisocyanate and its associated chain extender. In the context of the present invention, the most important chain extenders for the above-identified TPUs are linear diols such as, for example, ethylene glycol, 1,4-butanediol, 1,6-hexanediol, and hydroquinone bis(2-hydroxyethyl) ether. Exemplary of the commercially available TPU thermoplastic elastomers include those available fro DuPont (I.E. Du Pont de Nemours and Company, United States) under the tradename HYLENE, as well as those available from Morton (Morton International Specialty Chemicals) under the tradename IROGRAN.

The polyolefin-based thermoplastic elastomers (*i*.*e*. TPOs) of the present invention generally include random block copolymers (*e.g.*, ethylene α-olefin copolymers), block copolymers (*e*.*g*., hydrogenated butadiene-isoprene-butadiene block copolymers), stereoblock polymers (*e*.*g*., stereoblock polypropylene), graft copolymers (*e*.*g*., polyisobutylene-g-polystyrene and EPDM-g-pivalolactone), and blends (*e*.*g*. blends of ethylene-propylene random copolymer with isotactic polypropylene and dynamically vulcanized blends of EPDM with a crystalline polyolefin). As is appreciated by those skilled in the art, all of these thermoplastic elastomers generally depend on crystallization of polymer chains to produce an elastomeric structure. For example, in the TPO random block copolymers (which are structurally similar to TPU random block copolymers) ethylene sequences long enough to crystallize at use temperature act as physical crosslinks for the amorphous elastic chain segments. In the TPO stereoblock copolymers, changes in intrachain tacicity (*i*.*e*., alternating stereoregularities) provide for the alternating crystalline and amorphous sequences. Furthermore, those skilled in the art recognize that many TPO thermoplastic elastomers embrace more than one thermoplastic elastomer classification as set forth above.

The thermoplastic elastomers based on halogen-containing polyolefins of the present invention include those thermoplastic elastomers having halogen atoms attached to the polymer backbone, as well as some blends of poly(vinyl chloride) (PVC) with crosslinked or elastomeric polymers. Exemplary in this regard is melt-processable rubber (MBR), as well as blends of PVC with acrylonitrile-butadiene elastomer (NBR), copolyester (CPO), and some thermoplastic polyurethane elastomers (TPUs).

The thermoplastic elastomers based on dynamically vulcanized elastomer-thermoplastic blends of the present invention are generally made through the relatively new processing technology referred to as "dynamic vulcanization." This proprietary processing technology has provided several novel thermoplastic elastomer materials (referred to herein as "thermoplastic vulcanizates") that have many properties as good or even, in some aspects, better than those of more traditional styrenic tri-block copolymers. Exemplary in this regard are the proprietary products prepared by the dynamic vulcanization of blends of olefin rubber with polyolefin resin such as those sold by Shell and Advanced Elastomer Systems (Shell Chemical Company, United States; Advanced Elastomer Systems, L.P., United States) under the tradename SANTOPRENE. Other thermoplastic vulcanizates, now generally referred to as TPVs, include various blends of ethylene-propylene-diene terpolymer (EPDM) elastomer with polypropylene and/or polyethylene, as well as blends of polyolefin with diene rubbers such as butyl rubber, natural rubber, acrylonitrile-butadiene copolymer (NBR), and styrene-butadiene copolymer (SBR).

The thermoplastic polyether ester elastomers of the present invention are generally multiblock copolyether esters with alternating, random-length sequences of either long-chain or short-chain oxyalkylene glycols connected by ester linkages. These materials are related structurally to the polyurethane and the polyamide thermoplastic elastomers in that they also contain repeating high-melting blocks that are capable of crystallization (hard segments) and amorphous blocks having a relatively low glass transition temperature (soft segments). Typically, the hard segments are composed of short-chain cyclic ester units such as teramethylene terephthalate, whereas the soft segments are generally derived from aliphatic polyether glycols. Exemplary of the thermoplastic polyether ester elastomers are the polyether-ester block copolymers sold by DuPont (DuPont Engineering Polymers) under the tradename HYTREL.

The thermoplastic elastomers based on polyamides of the present invention are generally characterized as having a polyamide hard segment and an aliphatic polyester, aliphatic polyether, and/or aliphatic polycarbonate soft segment. The polyamide-based thermoplastic elastomers, like the TPVs, are relative newcomers to the family of thermoplastic elastomers.

The styrenic thermoplastic elastomers of the present invention are generally characterized as polystyrene-polydiene block copolymers, where both ends of each polydiene chain are terminated by polystyrene segments. With this type of thermoplastic elastomer, the rigid polystyrene domains act as multifunctional junction points to give a crosslinked elastomer network similar in some aspects to that of conventional vulcanized rubber. The polystyrene segments may include substituted polystyrene such as, for example, poly(α-methylstyrene), copolymers of α-methylstyrene, and poly(*p*-*teri*-butylstyrene), although these types of polystyrene segments are generally less preferred. In addition, the polydiene segments may include, for example, polyisoprene, polybutadiene, ethylene-propylene copolymers, and ethylene-butylene copolymers. Exemplary of the styrenic thermoplastic elastomers are those sold by Shell (Shell Chemical Company, United States) under the tradename KRATON, and those sold by GLS (GLS Corporation, Thermoplastic Elastomers Division, United States). In this regard, the thermoplastic elastomer material of the present invention may comprise one or more styrenic block copolymers. Preferably, such styrenic block copolymers include one or more of a styrene-ethylene/butylene-styrene block copolymer (SEBS), a styrene-ethylene/propylene-styrene block copolymer (SEPS), a styrene-butadiene-styrene block copolymer (SBS), and a styrene-isoprene-styrene block copolymer (SIS) (*e.g.*, KRATON thermoplastic elastomer compounds. Shell Chemical Company, United States). In one embodiment, the thermoplastic elastomer of the present invention comprises a styrene-ethylene/butylene-styrene block copolymer (*e.g.*, Tuftec, Asahi Chemicals, Japan). As is appreciated by those skilled in the art, SBS and SIS are A-B-A type block copolymers having unsaturated elastomeric central segments, whereas SEBS and SEPS are A-B-A type block copolymers having saturated elastomeric central segments. Accordingly, and because of their structure, SBS and SIS are more sensitive to oxidation than SEBS and SEPS and are therefore less preferred.

The ethylene-α-olefin copolymers of the present invention generally comprise metallocene catalyzed ethylene-α-olefin copolymers, and more preferably, metallocene catalyzed ethylene-α-olefin copolymers selected from one or more of an ethylene-butene copolymer, an ethylene-hexane copolymer, and an ethylene-octene copolymer (any one of which may also be classified as a thermoplastic elastomer). In general, the alpha-olefin component of the ethylene-α-olefin copolymer ranges from 2% to 30% by weight of the copolymer. Moreover, the metallocene catalyzed ethylene-α-olefin copolymers have densities (gm/cc) generally ranging from 0.86 to 0.95, melt indexes (ASTM 1238) generally ranging from 0.2 to 30, and melting points (ºC, by DSC) generally ranging from 50-120. In one embodiment, the metallocene catalyzed ethylene-α-olefin copolymer comprises an ethylene-octene copolymer (*e*.*g*., Engage, Dupont Dow Elastomers, United States). As is appreciated by those skilled in the art, polymers manufactured using metallocene based catalyst technology have only been commercial available since about the early 1990s. More importantly, however, is that metallocene polymerization technology now allows for the manufacturing of relatively high molecular weight copolymers of very specific tacticities (*e*.*g*., isotactic and syndiotactic polymers), as well as the polymerization of almost any monomer - beyond the traditional C₃ to C₈ olefins - in an exact manner. (Note that a metallocene, as is appreciated by those skilled in the art, is a positively charged metal ion sandwiched between two negatively charged cyclopentadienyl anions).

In addition, those skilled in the art also recognize that ethylene-α-olefin copolymers, derived from metallocene based catalyst technology, include polyolefin "plastomers" or POPs (the name given to Exxon's EXACT product line, which is manufactured with proprietary EXXPOL catalyst technology, Exxon Chemical, United States) and polyolefin "elastomers" or POEs (the name given to Dupont Dow Elastomer's ENGAGE product line, which is manufactured with its proprietary INSITE catalyst technology, Dupon Dow Elastomers LLC, United States). These new polyolefin plastomers (POPs) and elastomers (POEs) are recognized as low molecular weight, linear low density ethylene-α-olefin copolymers made possible as a result of metallocene based catalyst technology. Moreover, any one of the above-identified ethylene-α-olefin copolymers, or combinations thereof, may be used in the various compositions of the present invention.

In addition to having one or more of the foregoing thermoplastic elastomers, some of the exemplary unitary golf balls of the present invention also include an ethylene-vinyl acetate copolymer component. As is appreciated by those skilled in the art, ethylene-vinyl acetate copolymers are long chains of ethylene hydrocarbons with acetate groups randomly distributed throughout the chains. Ethylene is generally copolymerized with vinyl acetate to yield ethylene vinyl acetate copolymer. Exemplary of the commercially available ethylene-vinyl acetate copolymers include those available from DuPont (I.E. Du Pont de Nemours and Company, United States) under the tradename ELVAX.

In order to optimize processability, many of the above-described thermoplastic elastomer materials and/or ethylene-vinyl acetate copolymers may be compounded (albeit optionally) to a large extent with other polymers (*e*.*g*., polypropylene, polyethylene, etc.), and may also be compounded with various oils, plasticizers, fillers and extenders, as well as other specialty additives (collectively referred to as processing additives). Indeed, and as appreciated by those skilled in the polymer compounding art, any number of various processing additives may be added to enhance one or more physical characteristics and properties of the unitary golf balls disclosed herein. Exemplary of such processing additives are those identified in Gãchter R., Müller H., The Plastics Additives Handbook, 4th ed., Hanser Publishers, Munich, Germany (1996) (incorporated herein by reference in its entirety). Thus, and in some embodiments, the thermoplastic elastomer materials and/or ethylene-vinyl acetate copolymers of the present invention may optionally be compounded with an "extending oil" and/or a "filler" such as, for example, calcium carbonate. Such processing additives may improve the base composition's overall processability, and enhance certain performance characteristics of the unitary golf balls made therefrom.

As is appreciated by those skilled in the art, selected amounts of one or more of the above-identified ingredients (which are all associated with certain embodiments of the present invention) may be compounded together as in the following exemplary manner. First, desired weight percentages of a selected thermoplastic elastomer (*e*.*g*., 10-25% of a SEBS block copolymer having a Shore Hardness ranging from about 45 to 75) and an ethylene-vinyl acetate copolymer (*e*.*g*., 65-75% of an ethylene-vinyl acetate copolymer, wherein the vinyl acetate content is about 15-18%), as well as desired amounts of processing additives and other specialty chemicals (*e*.*g*., colorants and stabilizers) may be added together in an appropriately sized first mixer. This dry blend may then be mixed and allowed to reach a temperature of 80ºF prior to feeding to an appropriately sized second continuous mixer. The blades of the second continuous mixer may then be rotated (*e*.*g*., at 175 rpm) so as to cause the dry blend to flux into a homogeneous melt at an elevated temperature (*e*.*g*., 171°C (340ºF)). The molten composition may then be transferred (*e*.*g*., via a transfer line jacketed with nitrogen) to a single screw palletizing extruder, extruded through the die of the extruder (*e*.*g*., a multi-hole die), cooled in a water bath, and strand cut through a cutter. The resulting pellets are then ready for manufacturing exemplary unitary golf balls of the present invention.

As is appreciated by those skilled in the art, the compounded ingredients (*e*.*g*., pellets) of the present invention may be formed into unitary golf balls by, for example, injection molding (*e*.*g*., use of a gated production mold in conjunction with a hot-runner system). Because the processing parameters associated with injection molding tend to vary substantially from one molding machine to another (due to factors such as, for example, the compression ratio of the injection barrel, clearances of screw flights, size, age, etc.), the preferred processing parameters (*e*.*g*., injection speeds, pressures, temperatures of the composition mix both in the barrel and after injection into the mold, etc.) associated with any particular machine needs to be established and optimized as is appreciated by those skilled in the art. Thus, and in connection with an exemplary gated and hot-runner injection molding process, the feedstock ingredients are combined with a suitable blowing agent (*e*.*g*., using automatic metering and mixing devices mounted directly on the injection molding machine), heated to a suitable temperature, and injected into one or more molds.

For example, a standard size golf ball may be made by injecting approximately 13.5 grams of a suitable polymeric composition as disclosed herein into a golf ball shaped mold. In this regard, it has been discovered that, in general, the faster the injection speed the better the finished product. More specifically, it has been found that injection speeds faster than 0.2 seconds tends to produce golf balls having the lowest reject rate; however, speeds as slow as 0.45 may also be acceptable. Moreover, it has also been found that if the injection speed is too slow, undesirable pre-foaming may occur which tends to reduce the surface quality among the foamed golf balls, and also tends to increase the variability of the internal cell structure among the foamed golf balls.

In general, the chemical blowing or foaming agents are specialty additives that evolve gas, such as N₂ or CO₂, through chemical reactions, so as to produce a foamed internal cell structure within a polymeric matrix. In some embodiments, the blowing agent is an azodicarbonamide (or modified azocarbonamide), sodium bicarbonate, or a mixture thereof (*e*.*g*., Spectratech FM1150H, Quantum Chemical Corp., United States). The blowing agent is generally temperature sensitive and comprises greater than about 1% by weight of the total feedstock, and typically comprises from about 6% to about 8% by weight of the total feedstock. In general, the feedstock ingredients and blowing agent are heated at the point of injection (preferably ranging from about 310 to about 210°C (410 ºF), and more preferably from 177 to 185 °C (about 350 to about 365 ºF), but generally below the "kickoff" temperature of the selected blowing agent), in large part, due to the shear friction of rapidly passing through the small opening of the gate (thereby initiating the foaming of the blowing agent). After a time period sufficient for the overall composition to effectively harden within the mold (preferably aided with cooling of the mold to a temperature ranging from 10 to 15 °C (about 50 to abut 60 ºF)), the mold is opened and the formed unitary golf balls are removed.

In order to ensure better uniformity, it is also generally desirable to cool the just removed golf balls by immersion into a cold water bath for about 5 to about 7 minutes. Importantly, it has been discovered that the cold water bath is preferably thoroughly agitated by rapidly mixing and swirling the water such that the golf balls immersed therein rotate about, thereby ensuring that they cool more uniformly than if the water bath was not agitated. Put simply, if the water bath is not sufficiently agitated then any golf balls placed therein will tend to float on one side (namely, with their lighter side facing upward) and as a result will not cool uniformly. Thus, a stagnant water bath promotes non-uniform cooling and thus tends to form golf balls with one side being slightly more dense than the other.

For purposes of illustration and not limitation, the following examples more specifically disclose various aspects of the present invention.

### EXAMPLES

In order to demonstrate some of the physical characteristics of the unitary golf balls of the present invention, several golf balls were made (having a weight distribution of about 11 grams to about 14 grams) and tested for average COR values as follows:

**TABLE 1: Unitary Golf Ball Compositions and Average COR values**

| **BALL** | **BASE** | **TPE** | **FOAM** | **COLOR** | **Avg. COR** |
|---|---|---|---|---|---|
| 1 | 82% Elvax 560 | 9% Santoprene 8211 | 8% | 1% color | 0.3774 |
| 2 | 82% Elvax 560 | 9% Santoprene 8211 | 8% | 1% | 0.3427 |
| 3 | 82% Elvax 560 | 9% Santoprene 8211 | 8% | 1% | 0.3893 |
| 4 | 72% Elvax 560 | 18% Dynaflex G 7736 | 8% | 2% | 0.3717 |
| 5 | 72% Elvax 560 | 18% Dynaflex G 7736 | 8% | 2% | 0.3889 |
| 6 | 72% Elvax 560 | 18% Dynaflex G 7736 | 8% | 2% | 0.3683 |
| 7 | 72% Elvax 560 | 18% Dynaflex G 7736 | 8% | 2%Purple | 0.3636 |
| 8 | 72% Elvax 560 | 18% Dynaflex G 7736 | 8% | 2% | 0.3565 |
| 9 | 72% Elvax 560 | 18% Dynaflex G 7736 | 8% | 2% | 0.383 |
| 10 | 72% Elvax 560 | 18% Dynaflex G 7736 | 8% | 2% | 0.36 |
| 11 | 72% Elvax 560 | 18% Dynaftex G 7736 | 8% | 2% | 0.3482 |
| 12 | 72% Elvax 560 | 18% Dynaflex G 7736 | 8% | 2%Blue | 0.3777 |
| 13 | 72% Elvax 560 | 18% Kraton 2104 | 8% | 2%Pink | 0.3664 |
| 14 | 72% Elvax 560 | 18% Kraton RP6653 | 8% | 2% | 0.3766 |
| 15 | %100 Elvax 560 | None | 8% | 2%Green | 0.39595 |
| 16 | 72% Elvax 560 | 18% Dynaflex 2711 | 8% | 2% | 0.3781 |
| 17 | 82% Elvax 560 | 9% Dupont Engage | 8% | 2% | 0.38905 |
| 18 | 69% EVA (59% 460, 41% 260) | 17% Kraton 2104 | 9% | 5% | 0.36995 |
| 19 | 72% Elvax 560 | 18% Santoprene | 8% | 2%Blue | N/A |
| 20 | 73% Elvax 460 | 18% Kraton 2701 | 7% | 2% | 0.33265 |
| 21 | 100% GLS 70Sur | None | 8% | 2% | 0.3604 |

where Santoprene 8211 has Shore Hardness of about 35; Dynaflex G 7736 has a Shore Hardness of about 36; Dynaflex 2771 has Shore Hardness of about 45; Kraton 2104 has Shore Hardness of about 39; Kraton RP6653 has Shore Hardness of about 32; Kraton 2701 has Shore Hardness of about 70; and Dupont Engage has Shore Hardness of about 60.

In other Example, several other golf balls were made (having a weight distribution of about 11 grams to about 14 grams) from a polymeric mixture comprising about 25 relative weight percent EVA and about 75 relative weight percent TPE (excludes blowing agent and colorant weight percentages) and tested for average COR values as follows:

**CHART 1: C.O.R. TEST FOR BALL (YELLOW#2-25%EVA/75%TPE) TEST SAMPLES FROM ALMOST GOLF**

| BALL 2A | | | | BALL2B | | | |
|---|---|---|---|---|---|---|---|
| | Vin | Vout | COR | | Vin | Vout | COR |
| | 142.82 | 55.54 | 0.3889 | | 136.80 | 52.91 | 0.3868 |
| | 146.18 | 54.17 | 0.3706 | | 146.01 | 51.75 | 0.3544 |
| | 143.2 | 50.27 | 0.3510 | | 140.04 | 51.73 | 0.3694 |
| | 143.97 | 52.54 | 0.3649 | | 142.92 | 53.18 | 0.3721 |
| | 135.54 | 48.80 | 0.3600 | | 139.57 | 54.12 | 0.3878 |
| | 137.04 | 51.39 | 0.3750 | | 147.99 | 53.50 | 0.3615 |
| | 147.19 | 55.03 | 0.3739 | | 142.98 | 52.38 | 0.3663 |
| | 145.99 | 55.30 | 0.3788 | | 143.68 | 52.71 | 0.3669 |
| | | | | | | | |
| AVG= | 142.74 | 52.88 | 0.3704 | AVG= | 142.50 | 52.79 | 0.3706 |
| SD= | 4.28 | 2.54 | 0.0117 | SD= | 3.61 | 0.83 | 0.0116 |
| RUNOUT= | .020(BEFORE)/.050(AFTER) | | | RUNOUT= | .015(BEFORE)/.040(AFTER) | | |

| BALL 2C | | | | | BALL 2D | | |
|---|---|---|---|---|---|---|---|
| | Vin | Vout | COR | | Vin | Vout | COR |
| | 138.52 | 53.67 | 0.3875 | | 132.70 | 51.59 | 0.3888 |
| | 134.61 | 55.21 | 0.4101 | | 142.59 | 51.28 | 0.3596 |
| | 148.17 | 51.37 | 0.3467 | | 142.73 | 52.83 | 0.3701 |
| | 139.00 | 52.55 | 0.3781 | | 147.25 | 54.04 | 0.3670 |
| | 145.03 | 51.98 | 0.3584 | | 136.18 | 50.81 | 0.3731 |
| | 149.70 | 52.13 | 0.3482 | | 144.53 | 52.41 | 0.3626 |
| | 138.81 | 50.86 | 0.3664 | | 154.46 | 52.22 | 0.3381 |
| | 140.39 | 51.94 | 0.3700 | | 144.36 | 50.06 | 0.3468 |
| | | | | | | | |
| AVG= | 141.78 | 52.46 | 0.3707 | AVG= | 143.10 | 51.91 | 0.3633 |
| SD= | 5.27 | 1.38 | 0.0212 | SD= | 6.62 | 1.25 | 0.0157 |
| RUNOUT= | .010(BEFORE)/.040(AFTER) | | | RUNOUT= | .030(BEFORE)/.075(AFTER) | | |

| | BALL 2E | | | | BALL 2F | | |
|---|---|---|---|---|---|---|---|
| | Vin | Vout | COR | | Vin | Vout | COR |
| | 136.71 | 51.74 | 0.3785 | | 142.03 | 52.63 | 0.3706 |
| | 139.57 | 52.05 | 0.3729 | | 137.91 | 52.58 | 0.3813 |
| | 132.82 | 52.64 | 0.3963 | | 141.58 | 53.99 | 0.3813 |
| | 146.11 | 54.22 | 0.3711 | | 141.26 | 50.70 | 0.3589 |
| | 136.28 | 54.66 | 0.4011 | | 147.82 | 52.56 | 0.3556 |
| | 149.95 | 57.66 | 0.3845 | | 142.47 | 51.57 | 0.3620 |
| | 149.63 | 53.83 | 0.3598 | | 147.93 | 52.97 | 0.3581 |
| | 152.09 | 53.79 | 0.3537 | | 142.67 | 51.88 | 0.3636 |
| | | | | | | | |
| AVG= | 142.90 | 53.82 | 0.3772 | AVG= | 142.96 | 52.36 | 0.3664 |
| SD= | 7.41 | 1.87 | 0.0165 | SD= | 3.38 | 0.99 | 0.0102 |
| RUNOUT= | .025(BEFORE)/.070(AFTER) | | | RUNOUT= . | 010(BEFORE)/.040(AFTER) | | |

| | BALL 2G | | | | BALL 2H | | |
|---|---|---|---|---|---|---|---|
| | Vin | Vout | COR | | Vin | Vout | COR |
| | 147.78 | 56.42 | 0.3818 | | 131.54 | 53.33 | 0.4054 |
| | 145.03 | 51.61 | 0.3559 | | 136.50 | 51.74 | 0.3790 |
| | 147.45 | 51.57 | 0.3497 | | 142.39 | 53.47 | 0.3755 |
| | 154.77 | 55.65 | 0.3596 | | 146.11 | 54.88 | 0.3756 |
| | 145.33 | 51.41 | 0.3537 | | 145.99 | 55.60 | 0.3808 |
| | 151.72 | 54.81 | 0.3613 | | 136.59 | 53.63 | 0.3926 |
| | 147.60 | 53.41 | 0.3619 | | 149.88 | 55.97 | 0.3734 |
| | 148.17 | 54.03 | 0.3646 | | 139.57 | 54.61 | 0.3913 |
| | | | | | | | |
| AVG= | 148.48 | 53.61 | 0.3611 | AVG= | 141.07 | 54.15 | 0.3842 |
| SD= | 3.26 | 1.95 | 0.0097 | SD= | 6.13 | 1.38 | 0.0112 |
| RUNOUT= | .020(BEFORE)/.035(AFTER) | | | RUNOUT= | .030(BEFORE)/.085(AFTER) | | |

| | BALL 2I | | | | BALL 2J | | |
|---|---|---|---|---|---|---|---|
| | Vin | Vout | COR | | Vin | Vout | COR |
| | 152.77 | 56.43 | 0.3694 | | 148.85 | 54.36 | 0.3652 |
| | 153.19 | 54.98 | 0.3589 | | 149.48 | 53.46 | 0.3576 |
| | 153.09 | 52.68 | 0.3441 | | 143.58 | 50.39 | 0.3510 |
| | 153.00 | 54.10 | 0.3536 | | 148.21 | 51.13 | 0.3450 |
| | 156.86 | 54.18 | 0.3454 | | 140.10 | 49.43 | 0.3528 |
| | 155.45 | 56.34 | 0.3624 | | 151.26 | 52.64 | 0.3480 |
| | 148.94 | 52.98 | 0.3557 | | 143.41 | 51.05 | 0.3560 |
| | 153.09 | 53.10 | 0.3469 | | 148.52 | 51.35 | 0.3457 |
| | | | | | | | |
| AVG= | 153.30 | 54.35 | 0.3545 | AVG= | 146.68 | 51.73 | 0.3527 |
| SD= | 2.29 | 1.46 | 0.0089 | SD= | 3.83 | 1.64 | 0.0068 |
| RUNOUT= | .020(BEFORE)/.050(AFTER) | | | RUNOUT= | .015(BEFORE)/.050(AFTER) | | |

In yet another Example, several other golf balls were made (having a weight distribution of about 11 grams to about 14 grams) from a polymeric mixture comprising about 50 relative weight percent EVA and about 50 relative weight percent TPE (excludes blowing agent and colorant weight percentages) and tested for average COR values as follows:

**CHART 2: C.O.R. TEST FOR BALL (YELLOW#1-50%EVA/50%TPE) TEST SAMPLES FROM ALMOST GOLF**

| | BALL 1A | | | | BALL 1B | | |
|---|---|---|---|---|---|---|---|
| | Vin | Vout | COR | | Vin | Vout | COR |
| | 143.8 | 52.27 | 0.3635 | | 138.72 | 53.09 | 0.3827 |
| | 136.71 | 51.34 | 0.3755 | | 133.10 | 53.30 | 0.4005 |
| | 144.26 | 53.98 | 0.3742 | | 133.80 | 52.64 | 0.3934 |
| | 146.07 | 54.26 | 0.3715 | | 154.20 | 56.13 | 0.3640 |
| | 144.97 | 53.40 | 0.3684 | | 129.27 | 51.86 | 0.4012 |
| | 141.74 | 53.86 | 0.3800 | | 154.85 | 56.48 | 0.3647 |
| | 134.34 | 52.02 | 0.3872 | | 129.13 | 51.73 | 0.4006 |
| | 136.02 | 52.12 | 0.3832 | | 148.74 | 55.26 | 0.3715 |
| | | | | | | | |
| AVG= | 140.99 | 52.91 | 0.3754 | AVG= | 140.23 | 53.81 | 0.3848 |
| SD= | 4.60 | 1.10 | 0.0078 | SD= | 10.82 | 1.89 | 0.0163 |
| RUNOUT= | 0.015(BEFORE)/.035(AFTER) | | | RUNOUT= | 0.035(BEFORE)/.080(AFTER) | | |

| | BALL 1C | | | | BALL 1D | | |
|---|---|---|---|---|---|---|---|
| | Vin | Vout | COR | | Vin | Vout | COR |
| | 152.65 | 54.39 | 0.3563 | | 160.46 | 47.64 | 0.2969 |
| | 150.97 | 54.83 | 0.3632 | | 137.38 | 54.41 | 0.3961 |
| | 134.16 | 51.18 | 0.3815 | | 140.06 | 53.86 | 0.3845 |
| | 148.70 | 53.13 | 0.3573 | | 147.17 | 55.90 | 0.3798 |
| | 146.91 | 53.61 | 0.3649 | | 148.15 | 54.82 | 0.3700 |
| | 143.29 | 46.99 | 0.3279 | | 139.00 | 53.21 | 0.3828 |
| | 136.11 | 48.24 | 0.3544 | | 143.97 | 54.86 | 0.3811 |
| | 140.49 | 48.22 | 0.3432 | | 141.82 | 53.67 | 0.3784 |
| | | | | | | | |
| AVG= | 144.16 | 51.32 | 0.3561 | AVG= | 144.75 | 53.55 | 0.3712 |
| SD= | 6.82 | 3.12 | 0.0157 | SD= | 7.39 | 2.53 | 0.0309 |
| RUNOUT= | 0.030(BEFORE)/.085(AFTER) | | | RUNOUT= | 0.040(BEFORE)/.105(AFTER) | | |

| | BALL 1E | | | | BALL 1F | | |
|---|---|---|---|---|---|---|---|
| | Vin | Vout | COR | | Vin | Vout | COR |
| | 123.50 | 50.19 | 0.4064 | | 145.79 | 56.75 | 0.3893 |
| | 133.46 | 53.63 | 0.4018 | | 147.49 | 57.09 | 0.3871 |
| | 128.68 | 53.01 | 0.4120 | | 139.04 | 54.05 | 0.3887 |
| | 136.48 | 54.20 | 0.3971 | | 156.27 | 57.36 | 0.3671 |
| | 150.31 | 56.06 | 0.3730 | | 160.36 | 57.51 | 0.3586 |
| | 120.90 | 49.83 | 0.4122 | | 140.27 | 55.08 | 0.3927 |
| | 150.04 | 56.86 | 0.3790 | | 155.88 | 57.33 | 0.3678 |
| | 126.36 | 51.85 | 0.4103 | | 153.70 | 57.10 | 0.3715 |
| | | | | | | | |
| AVG= | 133.72 | 53.20 | 0.3990 | AVG= | 149.85 | 56.53 | 0.3778 |
| SD= | 11.32 | 254 | 0.0152 | SD= | 7.87 | 1.27 | 0.0130 |
| RUNOUT= | 0.055(BEFORE)/.120(AFTER) | | | RUNOUT= | 0.045(BEFORE)/.100(AFTER) | | |

| | BALL 1G | | | | BALL 1H | | |
|---|---|---|---|---|---|---|---|
| | Vin | Vout | COR | | Vin | Vout | COR |
| | 151.70 | 55.05 | 0.3629 | | 138.60 | 54.68 | 0.3945 |
| | 155.47 | 56.55 | 0.3637 | | 144.38 | 54.76 | 0.3793 |
| | 153.02 | 56.29 | 0.3679 | | 147.04 | 54.93 | 0.3736 |
| | 162.26 | 59.03 | 0.3638 | | 149.32 | 53.09 | 0.3555 |
| | 148.41 | 54.94 | 0.3702 | | 156.84 | 55.66 | 0.3549 |
| | 140.15 | 55.11 | 0.3932 | | 159.08 | 55.63 | 0.3497 |
| | 144.03 | 51.96 | 0.3608 | | 140.86 | 53.06 | 0.3767 |
| | 143.18 | 55.36 | 0.3866 | | 159.54 | 55.81 | 0.3498 |
| | | | | | | | |
| AVG= | 149.78 | 55.54 | 0.3711 | AVG= | 149.46 | 54.70 | 0.3667 |
| SD= | 7.31 | 1.98 | 0.0121 | SD= | 8.21 | 1.09 | 0.0165 |
| RUNOUT= | 0.010(BEFORE)/.065(AFTER) | | | RUNOUT= | 0.050(BEFORE)/.080(AFTER) | | |

| | BALL 1I | | | | BALL 1J | | |
|---|---|---|---|---|---|---|---|
| | Vin | Vout | COR | | Vin | Vout | COR |
| | 157.83 | 55.54 | 0.3519 | | 149.70 | 53.73 | 0.3589 |
| | 146.03 | 54.39 | 0.3725 | | 132.89 | 51.86 | 0.3902 |
| | 154.58 | 54.44 | 0.3522 | | 137.59 | 52.30 | 0.3801 |
| | 158.25 | 54.48 | 0.3443 | | 147.12 | 53.26 | 0.3620 |
| | 154.32 | 54.09 | 0.3505 | | 142.29 | 53.35 | 0.3749 |
| | 163.91 | 57.46 | 0.3506 | | 134.50 | 52.47 | 0.3901 |
| | 157.68 | 53.14 | 0.3370 | | 141.96 | 53.84 | 0.3793 |
| | 144.28 | 52.91 | 0.3667 | | 141.68 | 52.71 | 0.3720 |
| | | | | | | | |
| AVG= | 154.61 | 54.56 | 0.3532 | AVG= | 140.97 | 52.94 | 0.3760 |
| SD= | 6.55 | 1.43 | 0.0114 | SD= | 5.80 | 0.71 | 0.0116 |
| RUNOUT= | 0.020(BEFORE)/.065(AFTER) | | | RUNOUT= | 0.010(BEFORE)/.065(AFTER) | | |

| | BALL 1K | | | | BALL 1L | | |
|---|---|---|---|---|---|---|---|
| | Vin | Vout | COR | | Vin | Vout | COR |
| | 149.61 | 55.13 | 0.3685 | | 138.72 | 52.63 | 0.3794 |
| | 145.48 | 53.67 | 0.3689 | | 142.78 | 53.20 | 0.3726 |
| | 150.06 | 53.68 | 0.3577 | | 134.44 | 53.31 | 0.3965 |
| | 145.94 | 54.20 | 0.3714 | | 148.68 | 55.21 | 0.3713 |
| | 149.97 | 55.07 | 0.3672 | | 149.10 | 55.07 | 0.3693 |
| | 145.37 | 52.65 | 0.3622 | | 136.91 | 5351 | 0.3908 |
| | 143.10 | 54.26 | 0.3792 | | 149.34 | 53.61 | 0.3590 |
| | 153.63 | 53.75 | 0.3499 | | 138.26 | 54.65 | 0.3953 |
| | | | | | | | |
| AVG= | 147.90 | 54.05 | 0.3656 | AVG= | 142.28 | 53.90 | 0.3793 |
| SD= | 3.46 | 0.81 | 0.0090 | SD= | 6.06 | 0.95 | 0.0137 |
| RUNOUT= | 0.015(BEFORE)/.065(AFTER) | | | RUNOUT= | 0.010(BEFORE)/.045(AFrER) | | |

In still yet another Example, several other golf balls were made (having a weight distribution of about 11 grams to about 14 grams) from a polymeric mixture comprising about 68 weight percent EVA, about 16.5 weight percent polypropylene, about 5.7 weight percent TPE, about 8 weight percent blowing agent, and about 1.8 weight percent yellow colorant, and tested for average COR values as follows:

**CHART 3: C.O.R. TEST FOR BALL (YELLOW 68%EVA/16.5%PP/5.7%TPE) TEST SAMPLES FROM ALMOST GOLF**

| | BALL 1 | | | | BALL 2 | | |
|---|---|---|---|---|---|---|---|
| | Vin | Vout | COR | | Vin | Vout | COR |
| | 140.61 | 51.96 | 0.3695 | | 143.55 | 50.97 | 0.3551 |
| | 144.36 | 54.82 | 0.3797 | | 147.78 | 52.01 | 0.3519 |
| | 140.08 | 52.13 | 0.3721 | | 144.59 | 51.45 | 0.3558 |
| | 146.43 | 53.12 | 0.3628 | | 140.19 | 51.51 | 0.3674 |
| | 138.89 | 51.91 | 0.3737 | | 136.39 | 50.89 | 0.3731 |
| | 135.87 | 52.04 | 0.3830 | | 146.41 | 53.89 | 0.3681 |
| | 134.66 | 52.38 | 0.3890 | | 141.20 | 50.82 | 0.3599 |
| | 153.78 | 56.53 | 0.3676 | | 144.74 | 51.78 | 0.3577 |
| | | | | | | | |
| AVG= | 141.84 | 53.11 | 0.3747 | AVG= | 143.11 | 51.67 | 0.3611 |
| SD= | 6.22 | 1.69 | 0.0087 | SD= | 3.69 | 1.00 | 0.0075 |
| RUNOUTi= | 0.01 | | | RUNOUTi= | 0.010 | | |
| RUNOUTf= | 0.065 | | . | RUNOUTf= | 0.04 | | |

| | BALL 3 | | | | BALL 4 | | |
|---|---|---|---|---|---|---|---|
| | Vin | Vout | COR | | Vin | Vout | COR |
| | 148.39 | 55.46 | 0.3737 | | 149.39 | 54.04 | 0.3617 |
| | 144.91 | 53.95 | 0.3723 | | 143.23 | 54.74 | 0.3822 |
| | 143.84 | 54.56 | 0.3793 | | 148.92 | 53.58 | 0.3598 |
| | 141.28 | 52.65 | 0.3727 | | 142.19 | 54.56 | 0.3837 |
| | 141.74 | 52.94 | 0.3735 | | 149.23 | 52.54 | 0.3521 |
| | 139.55 | 53.06 | 0.3802 | | 146.76 | 54.85 | 0.3737 |
| | 144.63 | 55.01 | 0.3803 | | 146.20 | 53.71 | 0.3674 |
| | 149.84 | 54.02 | 0.3605 | | 140.15 | 54.32 | 0.3876 |
| | | | | | | | |
| | 144.27 | 53.96 | 0.3741 | AVG= | 145.76 | 54.04 | 0.3710 |
| SD= | 3.51 | 1.02 | 0.0065 | SD= | 3.53 | 0.76 | 0.0128 |
| RUNOUTi= | 0.010 | | | RUNOUTi= | 0.005 | | |
| RUNOUTf= | 0.06 | | | RUNOUTf= | 0.07 | | |

| | BALL 5 | | | | BALL 6 | | |
|---|---|---|---|---|---|---|---|
| | Vin | Vout | COR | | Vin | Vout | COR |
| | 138.79 | 50.94 | 0.3670 | | 147.60 | 54.50 | 0.3692 |
| | 138.10 | 50.96 | 0.3690 | | 143.00 | 52.59 | 0.3678 |
| | 143.88 | 54.94 | 0.3818 | | 150.58 | 55.84 | 0.3708 |
| | 147.08 | 53.92 | 0.3666 | | 143.74 | 53.84 | 0.3746 |
| | 140.73 | 51.96 | 0.3692 | | 149.23 | 53.62 | 0.3593 |
| | 141.70 | 52.06 | 0.3674 | | 144.24 | 53.55 | 0.3713 |
| | 145.31 | 54.52 | 0.3752 | | 144.01 | 54.75 | 0.3802 |
| | 146.76 | 53.61 | 0.3653 | | 139.24 | 52.61 | 0.3778 |
| | | | | | | | |
| AVG= | 142.79 | 52.86 | 0.3702 | AVG= | 145.21 | 53.91 | 0.3714 |
| SD= | 3.49 | 1.58 | 0.0056 | SD= | 3.70 | 1.10 | 0.0065 |
| RUNOUTi= | 0.015 | | | RUNOUTi= | 0.010 | | |
| RUNOUTf= | 0.08 | | | RUNOUTf= | 0.05 | | |

| | BALL 7 | | | | BALL 8 | | |
|---|---|---|---|---|---|---|---|
| | Vin | Vout | COR | | Vin | Vout | COR |
| | 142.53 | 52.57 | 0.3688 | | 144.97 | 52.58 | 0.3627 |
| | 145.45 | 55.14 | 0.3791 | | 142.09 | 52.87 | 0.3721 |
| | 145.24 | 54.74 | 0.3769 | | 147.36 | 54.35 | 0.3688 |
| | 143.82 | 53.30 | 0.3706 | | 145.05 | 52.92 | 0.3648 |
| | 146.82 | 54.89 | 0.3739 | | 140.98 | 53.04 | 0.3762 |
| | 143.49 | 53.61 | 0.3736 | | 140.47 | 52.31 | 0.3724 |
| | 142.82 | 54.84 | 0.3840 | | 141.56 | 52.61 | 0.3716 |
| | 140.27 | 53.20 | 0.3793 | | 148.13 | 53.57 | 0.3616 |
| | | | | | | | |
| AVG= | 143.81 | 54.04 | 0.3758 | AVG= | 143.83 | 53.03 | 0.3688 |
| SD= | 2.04 | 0.98 | 0.0050 | SD= | 2.96 | 0.65 | 0.0052 |
| RUNOUTi= | 0.010 | | | RUNOUTi= | 0.005 | | |
| RUNOUTf= | 0.065 | | | RUNOUTf= | 0.03 | | |

| | BALL 9 | | | | BALL 10 | | |
|---|---|---|---|---|---|---|---|
| | Vin | Vout | COR | | Vin | Vout | COR |
| | 139.65 | 52.19 | 0.3737 | | 146.54 | 52.97 | 0.3615 |
| | 143.00 | 54.93 | 0.3841 | | 143.95 | 54.73 | 0.3802 |
| | 149.01 | 55.19 | 0.3704 | | 146.41 | 53.26 | 0.3638 |
| | 139.70 | 54.11 | 0.3873 | | 145.84 | 54.08 | 0.3708 |
| | 148.26 | 54.35 | 0.3666 | | 142.61 | 53.35 | 0.3741 |
| | 145.79 | 56.39 | 0.3868 | | 149.77 | 55.12 | 0.3680 |
| | 145.82 | 53.17 | 0.3646 | | 149.10 | 55.47 | 0.3720 |
| | 140.90 | 52.56 | 0.3730 | | 142.80 | 52.86 | 0.3702 |
| | | | | | | | |
| AVG= | 144.02 | 54.11 | 0.3758 | AVG= | 145.88 | 53.98 | 0.3701 |
| SD= | 3.74 | 1.42 | 0.0091 | SD= | 2.68 | 1.02 | 0.0059 |
| RUNOUTi= | 0.015 | | | RUNOUTi= | 0.005 | | |
| RUNOUTf= | 0.06 | | | RUNOUTf= | 0.07 | | |

| | BALL 11 | | | | BALL 12 | | |
|---|---|---|---|---|---|---|---|
| | Vin | Vout | COR | | Vin | Vout | COR |
| | 143.23 | 53.24 | 0.3717 | | 148.37 | 54.04 | 0.3642 |
| | 143.76 | 53.46 | 0.3719 | | 141.92 | 52.09 | 0.3670 |
| | 139.39 | 53.90 | 0.3867 | | 144.13 | 51.82 | 0.3595 |
| | 143.14 | 55.32 | 0.3865 | | 146.95 | 53.17 | 0.3618 |
| | 144.22 | 53.32 | 0.3697 | | 146.69 | 53.40 | 0.3640 |
| | 144.61 | 53.04 | 0.3668 | | 141.76 | 54.25 | 0.3827 |
| | 139.88 | 53.21 | 0.3804 | | 147.32 | 54.59 | 0.3706 |
| | 139.30 | 52.52 | 0.3770 | | 142.88 | 54.90 | 0.3842 |
| | | | | | | | |
| AVG= | 142.19 | 53.50 | 0.3763 | AVG= | 145.00 | 53.53 | 0.3693 |
| SD= | 2.27 | 0.83 | 0.0076 | SD= | 2.64 | 1.13 | 0.0094 |
| RUNOUTi= | 0.010 | | | RUNOUTi= | 0.005 | | |
| RUNOUTf= | 0.05 | | | RUNOUTf= | 0.05 | | |

## Claims

1. A golf ball of unitary molded construction, wherein the entire golf ball is foamed from a composition that comprises an ethylene-vinyl acetate copolymer, a thermoplastic elastomer, and a blowing agent.

2. The golf ball of claim 1 wherein the golf ball has (i) a diameter that ranges from 4.1 to 6.1 cm (1.6 to 2.4 inches), (ii) a weight that ranges from 10 to 28 grams, and (iii) a coefficient of restitution value that ranges from 0.30 to 0.45.

3. The golf ball of claim 1 wherein the ethylene-vinyl acetate copolymer ranges from 40 to 90 weight percent of the composition.

4. The golf ball of claim 1 wherein the thermoplastic elastomer ranges from 10 to 60 weight percent of the composition.

5. The golf ball of claim 1 wherein the blowing agent ranges from 1 to 10 weight percent of the composition.

6. The golf ball of claim 1 wherein the ethylene-vinyl acetate copolymer has vinyl acetate content that by weight ranges from 15% to 18%.

7. The golf ball of claim 1 wherein the thermoplastic elastomer has a Shore Hardness ranging from 40 to 90.

8. The golf ball of claim 1 wherein the thermoplastic elastomer is one or more of (i) a thermoplastic elastomer based on a dynamically vulcanized elastomer-thermoplastic blend, (ii) a styrene tri-block copolymer thermoplastic elastomer, and (iii) an ethylene-α-olefin copolymer thermoplastic elastomer.

9. The golf ball of claim 1 wherein the thermoplastic elastomer is a thermoplastic elastomer based on a dynamically vulcanized elastomer-thermoplastic blend.

10. The golf ball of claim 1 wherein the thermoplastic elastomer is a styrene tri-block copolymer thermoplastic elastomer.

11. The golf ball of claim 10 wherein the styrene tri-block copolymer thermoplastic elastomer is a styrene-butadiene-styrene block copolymer, a styrene-ethylene/butylene-styrene block copolymer, or a combination thereof.

12. The golf ball of claim 10 wherein the styrene tri-block copolymer thermoplastic elastomer is a styrene-ethylene/butylene-styrene block copolymer.

13. The golf ball of any one of claims 9-12 foamed from a composition comprising 60 to 90 weight percent ethylene-vinyl acetate copolymer, 5 to 25 weight percent thermoplastic elastomer and 5 to 13 weight percent blowing agent based on the weight of the composition.

14. The golf ball of claim 1, further comprising polypropylene.

15. The golf ball of claim 14 wherein the polypropylene ranges from 1.5 to 10 weight percent of the composition.

16. The golf ball of claim 1, further comprising polyethylene.

17. The golf ball of claim 16 wherein the polyethylene ranges from 1.5 to 10 weight percent of the composition.

18. A method of making a golf ball of unitary molded construction comprising at least the following steps:
compounding a polymeric composition from the ingredients comprising an ethylene-vinyl acetate copolymer and a thermoplastic elastomer;
combining the polymeric composition with a blowing agent to yield a feedstock;
injecting the feedstock into a mold having a substantially spherical shape; and
cooling the mold to form the golf ball.

19. The method of making a golf ball in accordance with claim 18 further comprising the step of quenching the golf ball in an agitated water bath.

20. The method of making a golf ball in accordance with claim 18 wherein the ethylene-vinyl acetate copolymer ranges from 40 to 90 weight percent of the composition.

21. The method of making a golf ball in accordance with claim 18 wherein the thermoplastic elastomer ranges from 10 to 60 weight percent of the composition.

## Patentansprüche

1. Ein Golfball von einheitlich geformter Konstruktion, wobei der gesamte Golfball aus einer Zusammensetzung geschäumt wird, die ein Ethylenvinylacetat-Copolymer, ein thermoplastisches Elastomer und ein Treibmittel umfasst.

2. Der Golfball gemäß Anspruch 1, worin der Golfball (i) einen Durchmesser in einem Bereich von 4,1 bis 6,1 cm (1,6 bis 2,4 Zoll), (ii) ein Gewicht in einem Bereich von 10 bis 28 Gramm und (iii) einen Rückkehrkoeffizienten in einem Bereich von 0,30 bis 0,45 hat.

3. Der Golfball gemäß Anspruch 1, worin das Ethylenvinylacetat-Copolymer in einem Bereich von 40 bis 90 Gewichtsprozent der Zusammensetzung liegt.

4. Der Golfball gemäß Anspruch 1, worin das thermoplastische Elastomer in einem Bereich von 10 bis 60 Gewichtsprozent der Zusammensetzung liegt.

5. Der Golfball gemäß Anspruch 1, worin das Treibmittel in einem Bereich von 1 bis 10 Gewichtsprozent der Zusammensetzung liegt.

6. Der Golfball gemäß Anspruch 1, worin das Ethylenvinylacetat-Copolymer einen Vinylacetat-Gehalt nach Gewicht hat, der in einem Bereich von 15% bis 18% liegt.

7. Der Golfball gemäß Anspruch 1, worin das thermoplastische Elastomer eine Shore-Härte in einem Bereich von 40 bis 90 hat.

8. Der Golfball gemäß Anspruch 1, worin das thermoplastische Elastomer eines oder mehr ist von (i) einem thermoplastischen Elastomer auf der Basis einer dynamisch vulkanisierten Elastomer-Thermoplast-Mischung, (ii) einem Styrol-Triblock-Copolymer-thermoplastischen Elastomer und (iii) einem Ethylen-α-Olefin-Copolymer-thermoplastischen Elastomer.

9. Der Golfball gemäß Anspruch 1, wobei das thermoplastische Elastomer ein thermoplastisches Elastomer auf der Basis einer dynamisch vulkanisierten Elastomer-Thermoplast-Mischung ist.

10. Der Golfball gemäß Anspruch 1, wobei das thermoplastische Elastomer ein Styrol-Triblock-Copolymer-thermoplastisches Elastomer ist.

11. Der Golfball gemäß Anspruch 10, wobei das Styrol-Tri-block-Copolymer-thermoplastische Elastomer ein Styren-Butadien-Styren-Blockcopolymer, ein Styren-Ethylen/Butylen-Styren-Blockcopolymer oder eine Kombination davon ist.

12. Der Golfball gemäß Anspruch 10, wobei das Styrol-Tri-block-Copolymer-thermoplastische Elastomer ein Styren-Ethylen/Butylen-Styren-Blockcopolymer ist.

13. Der Golfball gemäß einem beliebigen der Ansprüche 9-12, geschäumt aus einer Zusammensetzung, die 60 bis 90 Gewichtsprozent Ethylenvinylacetatcopolymer, 5 bis 25 Gewichtsprozent thermoplastisches Elastomer und 5 bis 13 Gewichtsprozent Treibmittel, basierend auf dem Gewicht der Zusammensetzung, umfasst.

14. Der Golfball gemäß Anspruch 1, der weiter Polypropylen umfasst.

15. Der Golfball gemäß Anspruch 14, wobei das Polypropylen in einem Bereich von 1,5 bis 10 Gewichtsprozent der Zusammensetzung liegt.

16. Der Golfball gemäß Anspruch 1, der weiter Polyethylen umfasst.

17. Der Golfball gemäß Anspruch 16, worin das Polyethylen in einem Bereich von 1,5 bis 10 Gewichtsprozent der Zusammensetzung liegt.

18. Ein Verfahren zur Herstellung eines Golfballs von einheitlich geformter Konstruktion, das mindestens die folgenden Schritte umfasst:
Mischen einer Polymer-Zusammensetzung aus den Inhaltsstoffen, die ein Ethylenvinylacetat-Copolymer und ein thermoplastisches Elastomer umfassen,
Kombinieren der Polymerzusammensetzung mit einem Treibmittel, um ein Ausgangsmaterial zu ergeben,
Einspritzen des Ausgangsmaterials in eine im Wesentlichen kugelige Form, und
Abkühlen der Form zum Bilden des Golfballs.

19. Das Verfahren zur Herstellung eines Golfballs gemäß Anspruch 18, das weiter den Schritt der Abschreckung des Golfballs in einem gerührten Wasserbad umfasst.

20. Das Verfahren zur Herstellung eines Golfballs gemäß Anspruch 18, wobei das Ethylenvinylacetat-Copolymer in einem Bereich von 40 bis 90 Gewichtsprozent der Zusammensetzung liegt.

21. Das Verfahren zur Herstellung eines Golfballs gemäß Anspruch 18, wobei das thermoplastische Elastomer in einem Bereich von 10 bis 60 Gewichtsprozent der Zusammensetzung liegt.

## Revendications

1. Balle de golf de construction unitaire moulée, dans laquelle la balle de golf est en totalité moussée à partir d'une composition comprenant un copolymère éthylène-acétate de vinyle, un élastomère thermoplastique et un agent gonflant.

2. Balle de golf selon la revendication 1, dans laquelle la balle de golf prés.ente (i) un diamètre compris dans la fourchette allant de 4, 1 à 6, 1 cm (1, 6 à 2, 4 pouces), (ii) un poids compris dans la fourchette allant de 10 à 28 grammes, et (iii) un coefficient de restitution dont la valeur est comprise dans la fourchette allant de 0,30 à 0,45.

3. Balle de golf selon la revendication 1, dans laquelle le copolymère éthylène-acétate de vinyle constitue de 40 à 90 pour cent en poids de la composition.

4. Balle de golf selon la revendication 1, dans laquelle l'élastomère thermoplastique constitue de 10 à 60 pour cent en poids de la composition.

5. Balle de golf selon la revendication 1, dans laquelle l'agent gonflant constitue de 1 à 10 pour cent en poids de la composition.

6. Balle de golf selon la revendication 1, dans laquelle le copolymère éthylène-acétate de vinyle présente une teneur en acétate de vinyle comprise dans la fourchette allant de 15 à 18 pour cent en poids.

7. Balle de golf selon la revendication 1, dans laquelle l'élastomère thermoplastique présente une dureté Shore comprise dans la fourchette allant de 40 à 90.

8. Balle de golf selon la revendication 1, dans laquelle l'élastomère thermoplastique est un ou plusieurs parmi (i) un élastomère thermoplastique à base de mélange thermoplastique d'élastomères vulcanisé dynamiquement, (ii) un élastomère thermoplastique copolymère tri-blocs de styrène, et (iii) un élastomère thermoplastique copolymère éthylène-α-oléfine.

9. Balle de golf selon la revendication 1, dans laquelle l'élastomère thermoplastique est un élastomère thermoplastique à base de mélange thermoplastique d'élastomères vulcanisé dynamiquement.

10. Balle de golf selon la revendication 1, dans laquelle l'élastomère thermoplastique est un élastomère thermoplastique copolymère tri-blocs de styrène.

11. Balle de golf selon la revendication 10, dans laquelle l'élastomère thermoplastique copolymère tri-blocs de styrène est un copolymère à blocs styrène-butadiène-styrène, un copolymère à blocs styrène-éthylène/butylène-styrène, ou une combinaison de ceux-ci.

12. Balle de golf selon la revendication 10, dans laquelle l'élastomère thermoplastique copolymère tri-blocs de styrène est un copolymère à blocs styrène-éthylène/butylène-styrène.

13. Balle de golf selon l'une quelconque des revendications 9 à 12, obtenue par moussage à partir d'une composition comprenant de 60 à 90 pour cent en poids de copolymère éthylène-acétate de vinyle, de 5 à 25 pour cent en poids d'élastomère thermoplastique et de 5 à 13 pour cent en poids d'agent gonflant, basé sur le poids de la composition.

14. Balle de golf selon la revendication 1, comprenant en outre du polypropylène.

15. Balle de golf selon la revendication 14, dans laquelle le polypropylène est compris dans la fourchette allant de 1,5 à 10 pour cent en poids de la composition.

16. Balle de golf selon la revendication 1, comprenant en outre du polyéthylène.

17. Balle de golf selon la revendication 16, dans laquelle le polyéthylène est compris dans la fourchette allant de 1,5 à 10 pour cent en poids de la composition.

18. Procédé de fabrication d'une balle de golf de construction unitaire moulée, comprenant au moins les étapes suivantes :
mélange d'une composition polymérique formée des ingrédients comprenant un copolymère éthylène-acétate de vinyle et un élastomère thermoplastique ;
combinaison de la composition polymérique et d'un agent gonflant, pour produire une charge d'alimentation ;
injection de la charge d'alimentation dans un moule ayant une forme sensiblement sphérique ; et
refroidissement du moule, pour former la balle de golf.

19. Procédé de fabrication d'une balle de golf selon la revendication 18, comprenant en outre l'étape de trempage de la balle de golf dans un bain d'eau agité.

20. Procédé de fabrication d'une balle de golf selon la revendication 18, dans lequel le copolymère éthylène-acétate de vinyle constitue de 40 à 90 pour cent en poids de la composition.

21. Procédé de fabrication d'une balle de golf selon la revendication 18, dans lequel l'élastomère thermoplastique constitue de 10 à 60 pour cent en poids de la composition.
